# EUROPÄISCHE PATENTANMELDUNG

(11) **EP 1 175 838 A2**
(43) Veröffentlichungstag der Anmeldung: **30.01.2002**
(21) Anmeldenummer: 01116735.0
(22) Anmeldetag: 19.07.2001
(51) Int. Cl.: A23L 1/226, A23L 2/385, A23L 2/52

(54) **Beschwerungsmittel für Aromaöle und damit hergestellte Getränkekonzentrate und Getränke**

(30) Priorität: 28.07.2000 DE 10037256
(71) Anmelder: Nutrinova Nutrition Specialties & Food Ingredients GmbH, 65929 Frankfurt am Main (DE)
(72) Erfinder: Merkt, Gerhard, 65929 Frankfurt am Main (DE); Jager, Martin, Dr., 67294 Gauersheim (DE); Von Rymon Lipinski, Gert-Wolfhard, Prof. Dr., 65824 Schwalbach (DE)
(74) Vertreter: Schweitzer, Klaus, Dr. Dipl.-Chem.

(57) **Zusammenfassung**

Die Erfindung betrifft ein Beschwerungsmittel für Aromaöle mit verbesserter Handhabung und Anwendbarkeit, enthaltend Saccharoseacetatisobutyrat (SAIB) und einem oder mehreren viskositätserniedrigenden Mitteln sowie die Herstellung von Getränkekonzentraten und Getränken mit diesem Beschwerungsmittel.

## Beschreibung

Die vorliegende Erfindung betrifft Beschwerungsmittel für Aromaöle und damit hergestellte Getränkekonzentrate und Getränke. Bei den nicht-alkoholischen Getränken besitzen neben den Fruchtsäften und insbesondere die Cola-Getränke, Fruchtsaftgetränke und die Limonaden eine herausragende Rolle im Endverbraucher-Markt. Insbesondere Limonaden werden als Zitrus-Getränke sehr oft ohne Fruchtsaftgehalt hergestellt, weshalb diese Getränke z.T. klar sind. Der Verbraucher zieht jedoch in der Regel ein trübes Getränk einem klaren Produkt vor, da er trübe Getränke für gehaltvoller und bekömmlicher hält. Es besteht deshalb ein erhöhtes Bedürfnis nach trüben Getränken.

Trübe Getränke mit Zitrusgeschmackstoffen können Fruchtsaft oder Fruchtsaftkonzentrat, weitere Aromakomponenten, Süßungsmittel, Säuerungsmittel und weitere Inhaltsstoffe, z. B. Farbstoffe, Trubstabilisatoren, Vitamine und andere Nährstoffe enthalten; bei karbonisierten Produkten auch Kohlendioxid. Bei diesen Getränken wird die Trübung durch Trubstoffe aus dem Saft bewirkt.

Getränke mit Zitrusgeschmack enthalten gewöhnlich Aromaöle, die einen wesentlichen Beitrag zum Aroma und Geschmack der Getränke liefern können. Bei diesen Getränken kann eine Trübung auch ohne Saftzugabe durch Emulgieren der Aromaöle erreicht werden. Diese Art der Trübung ist nicht zuletzt für karbonisierte Getränke von Interesse, da Kohlendioxid nach dem Öffnen gleichmäßiger entbunden wird, aber auch für nicht karbonisierte Produkte wie Fitness- oder Sportlergetränke, bei denen Trub aus dem Fruchtsaft schwieriger zu stabilisieren ist als bei einfachen Fruchtsaftgetränken.

In der Praxis gelingt es aber nicht, allein durch Emulgieren der Aromaöle lagerstabile Getränke herzustellen, da sich die Aromaöle und die Wasserphase der Getränke in ihrer Dichte deutlich unterscheiden. Auf Grund der geringeren spezifischen Dichte neigen die Aromaöle auch bei sehr feiner Verteilung dazu, aufzurahmen und sich an der Oberfläche der Flüssigkeit abzusetzen, was sogar zur Bildung einer ringförmigen Ablagerung im Flaschenhals, dem "Ölkragen" führen kann. Solche Abscheidungen machen das Getränk nicht nur unansehnlich, sondern können sogar zu geschmacklichen Änderungen des Getränks führen.

Zur Vermeidung solcher Abscheidungen müssen die Emulsionen stabilisiert werden. Dazu dienen zum Einen wasserlösliche Stabilisatoren, wie z.B. modifizierte Stärken oder Gummi Arabicum und teilweise zusätzlich Öl-in-Wasser-Emulgatoren. Zum Anderen werden sogenannte Beschwerungsmittel verwendet. Diese Beschwerungsmittel sind nicht wasser- sondern öllöslich und müssen mit den Aromaölen weitestgehend mischbar sein. Sie haben die Aufgabe, die Öltröpfchen auf die gleiche spezifische Dichte wie die Wasserphase der Getränke einzustellen. Damit wird ein Aufrahmen der spezifisch leichteren Öltröpfchen in der wässrigen Phase des Getränkes verhindert und ein stabiles Verbraucherprodukt über eine längere Haltbarkeitszeit erreicht.

Beschwerungsmittel müssen neben der weitestgehenden Mischbarkeit mit den Aromaölen eine deutlich höhere Dichte als die wässrige Phase der Getränke aufweisen, damit der erforderliche emulsionsstabilisierende Effekt überhaupt eintreten kann. Die Dichte der Aromaöle liegt üblicherweise im Bereich von unter 0,9 g/ml, während die Wasserphase von Erfrischungsgetränken Werte bis über 1,04 g/ml annehmen kann.

Daneben müssen Beschwerungsmittel farb-, geruch- und geschmacklos, mit den Inhaltsstoffen der Aromaöle verträglich und unter den Bedingungen der Getränke, also meist bei deutlich saurem pH-Wert und Lichtzutritt lagerstabil sein. Nur eine kleine Zahl von Stoffen erfüllt diese Voraussetzungen weitgehendst und ist darüber hinaus auch aus gesundheitlicher Sicht für die Verwendung als Beschwerungsmittel in Getränken geeignet. Dazu gehören Dammar-Harz und Glycerinester von Wurzelharzen. Die auf Grund ihrer hohen Dichte technisch als Beschwerungsmittel besonders gut geeigneten bromierten Speiseöle werden aus gesundheitlicher Sicht nicht sehr günstig bewertet und sind nur noch in wenigen Ländern lebensmittelrechtlich zugelassen. Ein synthetisch herstellbares und damit gut und breit verfügbares Beschwerungsmittel ist Saccharoseacetatisobutyrat (SAIB), mit Essigsäure und Isobuttersäure etwa im Verhältnis 2 : 6 veresterte Saccharose. SAIB hat gegenüber den übrigen Produkten den Vorteil, dass es farblos, geschmacklos, keinerlei Veränderungen wie z.B. einer Fettsäureoxidation oder anderen Oxidations- oder sonstigen störenden Reaktionen unterworfen ist und in zahlreichen Ländern für die Verwendung in Getränken lebensmittelrechtlich zugelassen ist (s. EASTMAN SAIB-SG for beverage applications, Publication ZM-90C, July 1995 und EASTMAN Chemical Company, Vol.2 No. 4, November 1994 'Food for Thought').

Die praktische Anwendung von SAIB in reiner Form ist allerdings schwer, da es bei Raumtemperatur eine sehr hohe Viskosität von ca. 20 000 Pa•s aufweist. Damit ist es bei Raumtemperatur sehr zähflüssig und als solches als Flüssigkeit nicht mehr zu dosieren. Bei höheren Temperaturen sinkt die Viskosität dramatisch. Wird SAIB während der Verarbeitung auf Temperaturen von deutlich über 60 °C erwärmt, läßt sich eine pumpfähige und dosierfähige Flüssigkeit erhalten. Eine solche Erwärmung erfordert allerdings einige Zeit, damit das Produkt nicht überhitzt wird und dabei unerwünschte Veränderungen erleidet. Ein solches Erhitzen läßt sich nur schwer in die üblichen Betriebsabläufe bei der Getränkeherstellung eingliedern und ist damit unwirtschaftlich.

Zur Behebung dieser Schwierigkeiten in derAnwendung wurde versucht, die Viskosität von SAIB durch Mischung mit anderen Stoffen abzusenken. Dafür werden insbesondere Ethanol (z.B. Eastman SAIB-ET10) und Citrusöle (z.B. Eastman SAIB-CO) verwendet (s. EASTMAN SAIB-SG for beverage applications, Publication ZM-90C, July 1995).

Eine Zugabe von ca. 10 Vol% Ethanol (z.B. Eastman SAIB-ET10) führt zu einer Reduzierung der Viskosität auf ca. 1000 mPa•s. Die Verwendung von Ethanol ist jedoch nachteilig. Ethanol beeinflusst die Stabilität der Emulsion im fertigen Getränk negativ.

Es erniedrigt die Oberflächenspannung derwässrigen Phase und kann bei Verwendung von Gummi Arabicum zu einer Denaturierung dieses Stabilisators führen. Ethanol darf zudem in vielen Ländern des Nahen Ostens und besonders den arabischen Staaten nicht in Getränken enthalten sein. Gerade in diesen Ländern ist aber der Pro-Kopf-Verbrauch an alkoholfreien Getränken sehr hoch. Ein Getränk auf der Basis einer SAIB-Ethanol-Lösung zeigt daher weder die optimale Emulsionsstabilität, noch ist es in einer ganzen Reihe von Ländern herstellbar und vermarktbar.

Als Alternative wird eine Formulierung basierend auf Terpenölen (z.B. Eastman SAIB-CO) eingesetzt. Hierbei werden Terpenöle mit einem auffallenden Zitrusgeschmack verwendet. Der starke Aromabeitrag dieser Terpenöle zum Aroma des Fertiggetränks ist in der Praxis aber unerwünscht. Die Oxidationsanfälligkeit der Terpenöle, und die Schwierigkeit, den Aromawert der Terpenöle in den SAIB-Formulierungen zu standardisieren, machen die Verwendung dieserzwarals Flüssigkeit dosierbaren SAIB-Formulierungen in der Praxis schwierig. Dazu kommt, dass diese Formulierungen für Produkte mit anderen als Zitrusaromen nicht verwendbar sind.

Obwohl SAIB und die oben beschriebenen SAIB-Formulierungen auf Terpenöl- und Alkohol-Basis in der Praxis eingesetzt werden, stehen die o.g. Nachteile der in diesen Formulierungen eingesetzten Komponenten, insbesondere die möglichen nachteiligen Auswirkungen auf die Beschaffenheit und Vermarktbarkeit der Fertiggetränke einer breiten Verwendung von SAIB im Wege. Es bestand die Aufgabe, eine SAIB-Formulierung einfacher Dosierbarkeit ohne die beschriebenen Nachteile zur Verfügung zu stellen.

SAIB ist mit Glycerin und 1.2-Propandiol - den für die Formulierung von Lebensmittelzutaten gängigen Lösemitteln - nicht mischbar,. Es wurde nun überraschend gefunden, dass es mit bei Raumtemperatur (=25°C) flüssigen (d.h. mit einer Viskosität von ≤ 1000 Pa•s) Verbindungen der Formel (I) 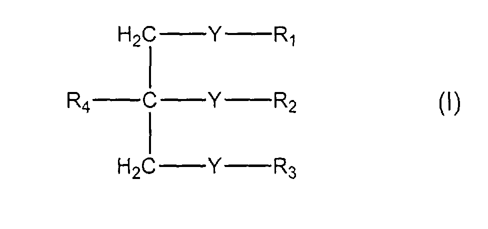 worin
- R₁,R₂ und R₃: beliebig ausgewählt sind aus ungeradzahligem C₁-C₁₇-alkyl oder C₃-C₁₇-alkenyl oder C₅-C₁₇-alkadienyl,
- R₄: H oder OH ist und
- Y: -O-C(O)- oder -C(O)-O-
bedeutet, sehr gut mischbar ist, sondern dass überraschenderweise auch die Viskosität von Mischungen bereits bei geringen Anteilen dieser Stoffe so stark erniedrigt wird, dass ein gut fließendes und damit als Flüssigkeit dosierbares Produkt resultiert. Bevorzugt sind Verbindungen der Formel (I) in denen R₁=R₂=R₃= Ethyl, R₄= OH und Y = -C(O)-O- ist (Triethylcitrat), R₁=R₂=R₃= Methyl, R₄= H und Y = -O-C(O)- ist (Triacetin) und R₁,R₂,R₃= beliebig ausgewählt aus C₇- und C₉-alkyl, R₄= H und Y = -O-C(O)-(Triglycerid).

Die Verbindungen der Formel (I) lösen auch Aromastoffe gut. Insbesondere Triacetin und Triethylcitrat weisen darüberhinaus spezifische Dichten in der Größenordnung von SAIB auf und sind nur beschränkt wasserlöslich, vermindern den Beschwerungseffekt von SAIB also nicht.

Verbindungen der Formel (I) sind käuflich erhältlich; sie sind aber auch beispielsweise erhältlich durch Umsetzung von Glycerin mit den entsprechenden Carbonsäuren (für Y= -O-C(O)-) bzw. ihren C₁-C₃-Alkylestern oder Halogeniden, insbesondere Chloriden. Verbindungen der Formel (I) mit Y= -C(O)-O- lassen sich beispielsweise durch Umsetzung von Zitronensäure mit den entsprechenden gesättigten oder ungesättigten Alkoholen herstellen.

SAIB ist ebenfalls käuflich erhältlich. Es kann erhalten werden durch Umsetzung von Saccharose mit Essigsäureanhydrid und Isobuttersäureanhydrid.

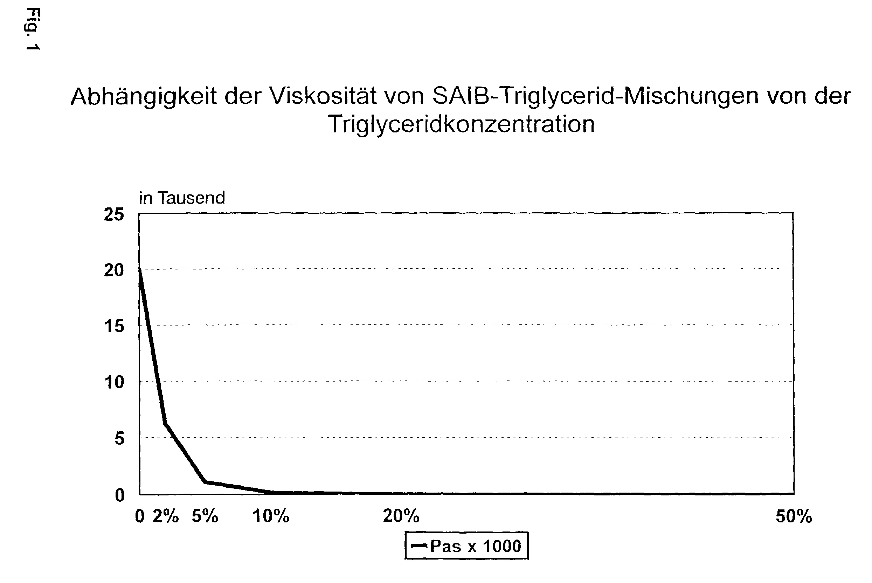

Auf Grund der guten Mischbarkeit von SAIB mit den Verbindungen der Formel (I) können grundsätzlich Mischungsverhältnisse in einem breiten Bereich eingestellt werden. Um den gewünschten Beschwerungseffekt zu erreichen, bleiben bei Verwendung von Fetten (=Verbindungen der Formel (I) mit Y= -O-C(O)- und R₄= H) deren Anteile auf maximal ca. 30 Gew.-% begrenzt. Allerdings sinkt die Viskosität bereits bei Zugabe kleiner Mengen der Verbindungen der Formel (I) drastisch (s. Fig. 1), so dass ein Dosieren als Flüssigkeit in der Praxis bereits bei Zugaben von wenigen Gew.-% möglich wird. Die viskositätsvermindernden Stoffe der Formel (I) werden in Beschwerungsmitteln für Aromaöle in Getränken erfindungsgemäß in Anteilen von 1-50 Gew.-%, bevorzugt 3-30 Gew.-%, besonders bevorzugt 5-20 Gew.-% (bezogen auf das Gewicht des Beschwerungsmittels) eingesetzt.

Die so erhaltenen frei fließenden SAIB-Lösungen zeigen ein neutrales sensorisches Verhalten selbst über längere Lagerzeiten, die auch in Getränken mindestens der typischerweise angegebenen Mindesthaltbarkeitsdauer entsprechen. Sie sind auf Grund ihres neutralen Geschmacks auch für andere als Zitrusaromen verwendbar.

Überraschenderweise läßt sich mit den erfindungsgemäßen Formulierungen sogar eine höhere optische Dichte und damit der Eindruck einer stärkeren Trübung erreichen als mit den derzeit verwendeten SAIB-Lösungen oder reinem SAIB.

Die erfindungsgemäßen Beschwerungsmittel können bei der Herstellung von Getränken in Kombination mit den Aromaölen unmittelbar eingesetzt werden. Zusammen mit den Aromaölen ergeben sie nach intensivem Mischen und ggf. Homogenisieren lagerstabile Emulsionen, wenn das Verhältnis von Aromaöl und Beschwerungsmittel der Dichte der Wasserphase angepasst wird. Das gilt insbesondere, wenn der Wasserphase noch zusätzlich Lebensmittelemulgatoren für Öl-in-Wasser-Emusionen oder selbst nicht emulgierende, aber emulsionsstabilisierende Mittel wie Gummi Arabicum, modifizierte Stärken, Johannisbrotkernmehl, Guarmehl oder Traganth in ähnlichen Mengen wie die in der Ölphase enthaltenen Beschwerungsmittel zugesetzt werden. Methoden zur Dichteanpassung sind literaturbekannt: z.B. die Pearson Square Methode.

Außerdem können die Beschwerungsmittel aber auch zusammen mit anderen Zutaten in Getränkekonzentrate eingearbeitet werden. Solche Konzentrate können neben den Aromaölen und Beschwerungsmitteln die im Getränk verwendete Säure, z. B. Citronensäure, Äpfelsäure, Milchsäure, Weinsäure, Fumarsäure oder Phosphorsäure, emulsionsstabilisierende Mittel, Konservierungsstoffe, z. B. Sorbinsäure oder Benzoesäure und deren Salze, sowie ggf. Wasser und Farbstoffe enthalten. Diese Konzentrate ergeben nach dem Ausmischen mit den anderen Getränkezutaten und Wasser nach intensivem Mischen und ggf. Homogenisieren ebenfalls lagerstabile Emulsionen.

Die folgenden Beispiele erläutern die Erfindung:

### Beispiel 1

### Herstellung von Beschwerungsmittelformulierungen mit Triglyceriden:

Reines SAIB wird erwärmt. Anschließend wird flüssiges Triglycerid (Miglyol 812® , Fa. Condea, Witten, Deutschland; eine Verbindung der Formel (I) mit R₁, R₂, R₃ beliebig aus C₇- und C₉-alkyl, R₄=H, Y= -O-C(O)-) in Mengen von 2, 5, 10, 20 und 50 Gew.-% (bezogen auf das Gewicht der Beschwerungsmittelformulierung) hinzugefügt und intensiv gemischt. Es resultiert eine homogene Flüssigkeit, deren Viskosität mit zunehmender Konzentration an Triglycerid steil abnimmt.

In Abhängigkeit der Mischungsverhältnisse liegen die in Figur 1 gezeigten Viskositäten vor.

### Beispiel 2

### Herstellung von Beschwerungsmittelformulierungen mit Triacetin

Reines SAIB wird erwärmt. Anschließend wird reines Triacetin (Verbindung d. Formel (I) mit R₁=R₂=R₃= Methyl, R₄= H und Y = -O-C(O)- ist) in Mengen von 2, 5, 10, 20 und 50 Gew.-% (bezogen auf das Gewicht der Beschwerungsmittelformulierung) hinzugefügt und intensiv gemischt. Es resultiert eine homogene Flüssigkeit. Mit zunehmender Triacetinkonzentration sinkt die Viskosität vergleichbar steil ab wie bei Verwendung der Triglyceride in Beispiel 1.

### Beispiel 3

### Herstellung von Beschwerungsmittelformulierungen mit Triethylcitrat

Reines SAIB wird erwärmt. Anschließend wird reines Triethylcitrat (Verbindung d. Formel (I) mit R₁=R₂=R₃= Ethyl, R₄= OH und Y = -C(O)-O-) in Mengen von 2, 5, 10, 20 und 50 Gew.-% (bezogen auf das Gewicht der Beschwerungsmittelformulierung) hinzugefügt und intensiv gemischt. Es resultiert eine homogene Flüssigkeit. Mit zunehmender Triethylcitratkonzentration sinkt die Viskosität vergleichbar steil ab wie bei Verwendung der Triglyceride in Beispiel 1.

### Beispiel 4

### Verwendung des Beschwerungsmittels

5 Gew.-Teile Citrusaromaöl und 10 Gew.-Teile Beschwerungsmittel bestehend aus 9 Gew.-Teile SAIB und einem Gew.-Teil Triglycerid (Miglyol 812) werden gemischt und beim Ausmischen des Fertiggetränks in einer Menge von 200 mg/l zugegeben, durch intensives Rühren und ggf. Homogenisieren gleichmäßig verteilt. Es resultiert ein deutlich getrübtes Getränk mit deutlichem Citrusaroma.

### Beispiel 5

### Herstellung eines Aromakonzentrats

50 Gew.-Teile Aromaöl (Orangenterpen MC Standard Nr. 2000.0769, MCI Miritz, Citrus Ingredients, Kirchgandern, Deutschland) und 100 Gew.-Teile Beschwerungsmittel bestehend aus 90 Gew.-Teilen SAIB und 10 Gew.-Teilen Triglycerid (Miglyol 812) werden gemischt. Daneben wird eine wässrige Phase aus 700 Gew.-Teilen Wasser hergestellt, in der 150 Gew.-Teile Gummi Arabicum als emulsionsstabilisierendes Mittel, 1 Gew.-Teil Zitronensäure und 1 Gew.-Teil Kaliumsorbat als Konservierungsstoff aufgelöst werden. Beide Phasen werden intensiv gemischt und homogenisiert.

### Beispiel 6

### Herstellung eines trüben Getränks aus einem Aromakonzentrat

1 Gew.-Teil des Aromakonzentrates gemäß Beispiel 5 wird mit 64 Gew.-Teilen Rohrzucker, 1 Gew.-Teil Zitronensäure und 34 Gew.-Teilen Wasser gemischt. Das fertige Getränk wird aus einem Gew.-Teil dieser Lösung und 7 Gew.-Teilen Wasser ausgemischt.

### Beispiel 7 (Vergleichsbeispiel)

Es wird ein Getränk entsprechend Beispiel 4, aber mit reinem, durch Erwärmen verflüssigtem SAIB in entsprechender Menge als Beschwerungsmittel hergestellt.

Das Getränk gemäß Beispiel 4 wird mit diesem Getränk visuell verglichen. Dabei ergibt sich für das Getränk gemäß Beispiel 4 der Eindruck einer deutlich stärkeren Trübung.

## Patentansprüche

1. Beschwerungsmittel für Emulsionen in Lebensmitteln und Getränken, enthaltend Saccharoseacetatisobutyrat (SAIB) und mindestens eine bei Raumtemperatur flüssige Verbindung der Formel (I) 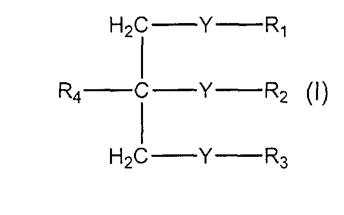 worin
R₁,R₂ und R₃ beliebig ausgewählt sind aus ungeradzahligem C₁-C₁₇-alkyl oder C₃-C₁₇-alkenyl oder C₅-C₁₇-alkadienyl und
R₄ H oder OH ist und
Y -O-C(O)- oder -C(O)-O-
bedeutet.

2. Beschwerungsmittel gemäß Anspruch 1, **dadurch gekennzeichnet, dass** in der Verbindung der Formel (I)
R₁=R₂=R₃ ist und Ethyl bedeutet,
R₄ OH bedeutet und
Y -C(O)-O- ist (Triethylcitrat)oder
R₁=R₂=R₃ ist und Methyl bedeutet
R₄ H bedeutet und
Y -O-C(O)- ist (Triacetin).

3. Beschwerungsmittel gemäß Anspruch 1, **dadurch gekennzeichnet, dass** in der Verbindung der Formel (I)
R₁,R₂ und R₃ beliebig ausgesucht sind aus C₇- und C₉-alkyl,
R₄ H bedeutet und
Y -O-C(O)- ist.

4. Beschwerungsmittel gemäß Anspruch 1, 2 oder 3, **dadurch gekennzeichnet, dass** die Verbindung der Formel (I) in einer Mengen von 1 - 50 Gew.-%, vorzugsweise 3 - 30 Gew.-% eingesetzt wird (bezogen auf das Gewicht des Beschwerungsmittels).

5. Beschwerungsmittel gemäß Anspruch 1, 2 oder 3, **dadurch gekennzeichnet, dass** die Verbindung der Formel (I) in einer Mengen von 5 - 20 Gew.-% eingesetzt wird (bezogen auf das Gewicht des Beschwerungsmittels).

6. Aromazubereitung, enthaltend ein Beschwerungsmittel gemäß einem der Ansprüche 1 bis 5 und mindestens ein Aromaöl und/oder Aromakonzentrat.

7. Aromazubereitung gemäß Anspruch 6, **dadurch gekennzeichnet, dass** das Aromaöl und/oder Aromakonzentrat in einer Menge von mindestens 40 Gew.-% (bezogen auf das Gewicht der Aromazubereitung) enthalten ist.

8. Aromazubereitung gemäß Anspruch 7, **dadurch gekennzeichnet, dass** das Aromaöl und/oderAromakonzentrat in einer Menge von 40-90 Gew.-% (bezogen auf das Gewicht der Aromazubereitung) enthalten ist.

9. Getränkekonzentrat, enthaltend ein Beschwerungsmittel gemäß einem der Ansprüche 1 bis 5.

10. Verwendung des Beschwerungsmittels gemäß Anspruch 1 zur Herstellung von alkoholischen und nichtalkoholischen Getränken.

11. Verwendung des Beschwerungsmittels gemäß Anspruch 1 zur Herstellung von Getränkekonzentraten.

12. Verwendung der Aromazubereitung gemäß Anspruch 6 zur Herstellung von getränkekonzentraten, alkoholischen und nichtalkoholischen Getränken.

13. Verwendung des Getränkekonzentrats gemäß Anspruch 9 zur Herstellung von alkoholischen und nichtalkoholischen Getränken.
